# EUROPEAN PATENT APPLICATION

(11) **EP 3 936 488 A1**
(43) Date of publication of application: **12.01.2022**
(21) Application number: 20315339.0
(22) Date of filing: 06.07.2020
(51) Int. Cl.: C04B 28/06

(54) **DRY MORTAR COMPOSITION**

(71) Applicant: Saint-Gobain Weber France, 94370 Sucy en Brie (FR)
(72) Inventor: PEREIRA FERNANDES, Vera, 3810-332 Santa Joana, Aveiro (PT); SEQUEIRA, Pedro, 3810-168 Aveiro (PT); CARDOSO DA SILVA, Luis, 3810-332 Aveiro (PT); LEIVA MUNOZ, Raül, 08208 Sabadell, Barcelona (ES); MARTY-BOUCHARD, Marie, 95880 Enghien-les-Bains (FR)
(74) Representative: Saint-Gobain Recherche

(57) **Abstract**

The invention relates to a dry mortar composition comprising 10 to 50wt% of Calcium Aluminate Cement, one or more polyphosphate(s) in a total amount of 2 to 8wt%, and aggregates in a total amount of 40 to 88wt%.

## Description

The present invention relates to a dry mortar composition.

A dry mortar composition is a pulverulent mixture comprising a hydraulic binder and aggregates. After mixing with water, it forms a paste, called wet mortar, that can be applied on various substrates before setting and hardening, finally forming a hardened mortar. Mortars can for example be used as renders, plasters, flooring compounds, tile adhesives, grouts...

The aim of the invention is to provide a mortar which does not swell under water and is both chemically- and abrasion-resistant.

Such properties are for example particularly useful for tiling grouts used in swimming pools, which must not swell under water and must withstand chemicals such as chlorine.

These objectives are achieved by means of a dry mortar composition comprising 10 to 50wt% of Calcium Aluminate Cement, one or more polyphosphate(s) in a total amount of 2 to 8wt%, and aggregates in a total amount of 40 to 88wt%.

Another object of the invention is a tiling grout made by mixing the above-mentioned dry mortar composition with water to form a paste and applying said paste in tile joints.

Still another object of the invention is a method for grouting tiles, wherein the dry mortar composition is mixed with water to form a paste and said paste is applied in tile joints.

In the detailed description, all the details regarding the components of the dry mortar composition (nature and quantity) also apply to hardened mortar (for example the hardened tiling grout). Amounts are given in weight contents with respect to the dry mortar composition and apply to the hardened mortar.

Calcium Aluminate Cement (CAC) is the hydraulic binder of the mortar, which may, after mixing with water, set, harden and bind the aggregates. The dry mortar composition preferably does not contain other hydraulic binder as CAC. In other words, CAC is the only hydraulic binder in the composition. Especially, the dry mortar composition preferably does not contain Portland Cement (OPC). It preferably does not contain pozzolanic materials such as blast furnace slags or fly ashes. It does preferably not contain boiler ashes (also known as bottom ashes).

Calcium aluminate cements, also known as "high-alumina cements" are cements containing a high amount of hydraulic calcium aluminates. The amount of alumina (Al₂O₃) in the Calcium Aluminate Cement is preferably at least 60wt%, even at least 70wt%.

The amount of CAC in the dry mortar composition is preferably 30 to 50%, even 35 to 45wt%.

The use of CAC as hydraulic binder makes it possible to obtain high compressive and flexural strengths, as well as a high acid resistance, especially to solutions containing hydrochloric acid.

The addition of one or more polyphosphate(s) makes it possible to avoid any swelling of the hardened mortar under water.

Polyphosphates are salts or esters containing a plurality of phosphate (PO₄) units linked by sharing oxygen atoms.

At least one, especially each or the, polyphosphate is preferably an alkali salt, especially a sodium salt.

At least one, especially each or the, polyphosphate is selected from pyrophosphates, tripolyphosphates, trimetaphosphates, metaphosphates and hexametaphosphates. Examples of such compounds are sodium pyrophosphate (Na₄P₂O₇), sodium tripolyphosphate (Na₅P₃O₁₀), sodium hexametaphosphate (NaPO₃)₆, and sodium metaphosphates (Na(ₙ₊₂)PₙO(₃ₙ₊₁)).

At least one, especially the, polyphosphate is preferably sodium tripolyphosphate.

The total amount of polyphosphates is preferably 3 to 7wt%, especially 4 to 6wt%.

The ratio of polyphosphate(s) to CAC is preferably 0.10 to 0.15, even 0.12 to 0.14 by weight.

The aggregates are preferably selected from siliceous, calcareous aggregates, dolomitic aggregates and mixtures thereof. Examples are ground limestone or dolomite and silica sand. A mixture of silica sand and limestone is preferred. The aggregates preferably comprise sands (size 0-5 mm) and fillers (size 0-0.1 mm).

Especially for tiling grouts, the average diameter (D50), based on a volume distribution, is preferably 0.20 mm, especially 0.15 mm and less, even 0.10 mm and less.

The total amount of aggregates in the dry mortar composition is preferably 40 to 68wt%, even 43 to 65wt%, especially 46 to 60wt%.

The dry mortar composition preferably comprises at least one accelerator and/or at least one retarder. The total amount of accelerators and retarders is preferably 0.001 to 1.0wt%. It advantageously contains both, in order to control the set and hardening of the cement.

Accelerators are for example alkali salts, such as lithium (or potassium) sulfates or carbonates, or organic salts such as calcium formate. The total amount of accelerators is preferably 0.001 to 0.1wt%. Retarders are for example carboxylic acids such as tartaric or citric acids or their salts. The total amount of retarders is preferably 0.01 to 1.0wt%.

The dry mortar composition preferably comprises one or more additive chosen from redispersible polymer powders, pigments, defoamers, stabilizers, thickeners, water-retention agents, shrinkage-reducing agents, hydrophobic agents, plasticizers and superplasticizers. The total amount of such additives is preferably 0.1 to 5.0wt%.

Pigments are for example TiO₂, iron oxides and/or carbon black. The total amount of pigments is preferably 0.01% to 5.0%.

Thickeners and water-retention agents are for example cellulose ethers. Their total amount is preferably 0.05 to 0.10wt%.

The redispersible polymer powder preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins (such as ethylene or propylene), dienes and vinyl halides. Particularly preferred polymers are copolymers of at least two of the abovementioned monomers, especially vinyl acetate-ethylene copolymers, vinyl ester-ethylene-vinyl chloride copolymers ,vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrenebutadiene copolymers, styrene-acrylate copolymers, vinyl acetate-(meth)acrylic acid-ethylene terpolymers. The amount of redispersible polymer powder is preferably 0.2 to 2.0wt%.

The ratio of water to the dry mortar composition ("water ratio") preferably ranges from 0.15 to 0.25 by weight, in order to get the right consistency for the paste (wet mortar).

The paste formed by mixing the dry mortar composition with water is applied in tile joints by the usual techniques, for example using a grout float.

The dry mortar composition is especially useful to grout the tiles of a pool basin, where the absence of swelling under water are particularly appreciated.

Other applications are however possible, for example façade renders or flooring compounds (such as screeds), whenever the hardened mortar is exposed to humidity and/or chemical aggression or abrasion.

The following examples illustrate the invention in a non-limitative way.

### Example 1

A dry mortar composition comprising 40wt% of CAC (Ternal^{®} White, Kerneos), 5wt% of sodium tripolyphosphate, 52wt% of aggregates (limestone + silica sand), 0.5wt% of tartaric acid, 0.01wt% of lithium carbonate, 1.0wt% of TiO₂ and 1.5wt% of other additives (redispersible polymer powder, thickeners...) was obtained by mixing the ingredients.

The composition was then mixed with water (water ratio of 0.21) to form a paste.

### Example 2 (comparative)

This comparative example is identical to Example 1, except that it did not contain sodium tripolyphosphate. The amount of silica sand was increase to compensate, and the water ratio was increased to 0.23 to obtain the same consistency as for example 1.

### Example 3 (comparative)

This comparative composition is a conventional tiling grout comprising 4wt% of OPC, 20wt% of CAC, 7wt% of a source of calcium sulfate, 67wt% of aggregates consisting of limestone filler and silica sand, 1wt% of a redispersible polymer powder and 1wt% of other additives (cellulose ether, hydrophobic agent, retarder...). The water ratio was 0.20.

Table 1 below shows the results obtained for these examples.

To measure the swelling under water, samples were prepared according to EN 12808-4 and cured at 22°C and 55% RH during 7 days. They were then immersed in water and the dimensional stability was evaluated once a week up to 24 months.

Compressive and flexural strength were measured according to EN 12808-3.

Shrinkage (in air) was measured according to EN 12808-4.

Chemical resistance was measured according to a test adapted from EN 12808-1. An aqueous HCl solution (pH=3) was used and changed every day so as to keep a constant pH.

**[Table 1]**

| | | Ex.1 | Ex.2 | Ex.3 |
|---|---|---|---|---|
| Swelling under water (mm/m) | 28d | -0.1 | +0.2 | +0.1 |
| | 6mo | +0.3 | +0.8 | -0.8 |
| | 12mo | +0.3 | +2.4 | -0.5 |
| | 24mo | +0.5 | +3.6 | -0.8 |
| Compressive strength (MPa) | 28d | 32 | 25 | 20 |
| Flexural strength (MPa) | 28d | 5 | 6 | 5 |
| Shrinkage (mm/m) | 28d | 1.2 | 1.0 | 1.2 |
| Acid resistance (MPa) | 35d | 32 | 33 | 12 |

These results show that the addition of polyphosphates makes it possible to avoid swelling of the grout under water, even after a very long period of time. The grout according to the invention also shows a much better acid resistance than the conventional grout of Example 3.

## Claims

1. A dry mortar composition comprising 10 to 50wt% of Calcium Aluminate Cement, one or more polyphosphate(s) in a total amount of 2 to 8wt%, and aggregates in a total amount of 40 to 88wt%.

2. The dry mortar composition as claimed in Claim 1, wherein the amount of Calcium Aluminate Cement is 30 to 50wt% and the total amount of aggregates is 40 to 68wt%.

3. The dry mortar composition as claimed in any one of the preceding Claims, wherein Calcium Aluminate Cement is the only hydraulic binder.

4. The dry mortar composition as claimed in any one of the preceding Claims, wherein the amount of alumina in the Calcium Aluminate Cement is at least 60wt%, even at least 70wt%.

5. The dry mortar composition as claimed in any one of the preceding Claims, wherein at least one polyphosphate is an alkali salt, especially a sodium salt.

6. The dry mortar composition as claimed in any one of the preceding Claims, wherein at least one polyphosphate is selected from pyrophosphates, tripolyphosphates, trimetaphosphates, metaphosphates and hexametaphosphates.

7. The dry mortar composition as claimed in the preceding Claim, wherein at least one polyphosphate is sodium tripolyphosphate.

8. The dry mortar composition as claimed in any one of the preceding Claims, wherein the ratio of polyphosphate(s) to Calcium Aluminate Cement is 0.10 to 0.15, even 0.12 to 0.14 by weight.

9. The dry mortar composition as claimed in any one of the preceding Claims, wherein the aggregates are selected from siliceous aggregates, calcareous aggregates, dolomitic aggregates, and mixtures thereof.

10. The dry mortar composition as claimed in any one of the preceding Claims, wherein the total amount of aggregates is 43 to 65wt%, especially 46 to 60wt%.

11. The dry mortar composition as claimed in any one of the preceding Claims, comprising at least one accelerator and at least one retarder in a total amount of 0.001 to 1.0wt%.

12. The dry mortar as claimed in any one of the preceding Claims, comprising one or more additive chosen from redispersible polymer powders, pigments, defoamers, stabilizers, thickeners, shrinkage-reducing agents, hydrophobic agents, plasticizers and superplasticizers, in a total amount of 0.1 to 5.0wt%.

13. A tiling grout made by mixing the dry mortar composition as claimed in any one the preceding Claims with water to form a paste and applying said paste in tile joints.

14. A method for grouting tiles, wherein a dry mortar composition as claimed in any one of Claims 1 to 12 is mixed with water to form a paste and said paste is applied in tile joints.

15. The method for grouting tiles as claimed in the preceding Claim, wherein the ratio of water to the dry mortar composition ranges from 0.15 to 0.25 by weight.
